# EUROPÄISCHE PATENTSCHRIFT

(11) **EP 1 036 285 B1**
(45) Veröffentlichungstag und Bekanntmachung des Hinweises auf die Patenterteilung: **24.03.2004**
(21) Anmeldenummer: 98955489.4
(22) Anmeldetag: 21.10.1998
(51) Int. Cl.: F16L 41/02, F16L 47/00, F16D 25/08

(54) **WINKELARMATUR FÜR EINE DRUCKLEITUNG EINER HYDRAULISCHEN KUPPLUNGSBETÄTIGUNG**
ANGLE FITTING FOR A PRESSURE LINE OF A HYDRAULIC CLUTCH CONTROL MECHANISM
GARNITURE D'ANGLE POUR UNE CONDUITE SOUS PRESSION D'UNE COMMANDE D'EMBRAYAGE HYDRAULIQUE

(30) Priorität: 10.12.1997 DE 19754702
(43) Veröffentlichungstag der Anmeldung: 20.09.2000
(73) Patentinhaber: LuK Lamellen und Kupplungsbau Beteiligungs KG, 77813 Bühl (DE)
(72) Erfinder: WELTER, Roland, D-77815 Bühl (DE); MEYER, Gerhard, D-91611 Lehrberg (DE); WINKELMANN, Ludwig, D-91056 Erlangen (DE)
(86) Internationale Anmeldenummer: PCT/EP1998/006627
(87) Internationale Veröffentlichungsnummer: WO 1999/030072

(56) Entgegenhaltungen:
- BE-A- 551 830
- DE-A- 19 522 477
- US-A- 5 108 135

## Beschreibung

### Gebiet der Erfindung

Die Erfindung betrifft ein Druckleitungssystem für eine hydraulische Kupplungsbetätigung einer Fahrzeugreibungskupplung. Derartige Kupplungsbetätigungen ersetzen bislang übliche Betätigungen, bei denen die Stellbewegung des Kupplungspedals über einen Bowdenzug auf einen Ausrückhebel der Reibungskupplung übertragen wurde. Der Aufbau einer hydraulischen Kupplungsbetätigung umfaßt einen dem Kupplungspedal zugeordneten Geberzylinder, der über eine Druckleitung mit einem der Reibungskupplung zugeordneten Nehmerzylinder verbunden ist. Eine Betätigung des Kupplungspedals bewirkt einen Druckaufbau im Geberzylinder, der über die Druckleitung auf den Nehmerzylinder übertragen wird. Dabei wird ein im Geberzylinder angeordneter, mit einem Ausrücklager verbundener Kolben, zur Betätigung der Reibungskupplung axial verschoben. Aufgrund von vorgegebenen Einbauverhältnissen im Motorraum erfordert die Montage der Druckleitung einen großen Montageaufwand aufgrund des geringen verfügbaren Einbauraums. Der erforderliche Bauraum ist dabei durch den einzuhaltenden Mindestbiegeradien der Druckleitung bestimmt. Als Alternative dazu wurden bislang aufwendig gefertigte Winkelanschlüsse oder zusätzliche Adapter verwendet.

### Hintergrund der Erfindung

Aus der US-A 4,601,374 ist der prinzipielle Aufbau einer hydraulischen Kupplungsbetätigung zu entnehmen, ohne dabei die Einbauverhältnisse zu berücksichtigen. Als Leitungsanschluß für die den Geber- mit dem Nehmerzylinder verbindendee Steck-Schraubverbindung vorgesehen. Von den Leitungsanschlüssen ausgehend bildet die Druckleitung zunächst jeweils einen radial aus den Zylindern austretenden Abschnitt, an den sich mit einem Radius ein abgewinkelter Verlauf anschließt. Dieser bekannte Stand der Technik verdeutlicht, daß der Druckleitungsverlauf durch die Biegeradien der Leitung bestimmt ist. Ein solch vorgegebener Leitungsverlauf erfordert einen hohen Aufwand bei der Montage. Aufgrund der engen Einbauverhältnisse, insbesondere bei frontgetriebenen Fahrzeugen, scheidet ein derartiger Leitungsverlauf aus. Das Dokument DE-A-195 22 477 offenbart ein Druckleitungssystem gemäß dem Oberbegriff des Anspruchs 1.

### Aufgabe der Erfindung

Ausgehend von der zuvor erläuterten Problemstellung, liegt der Erfindung die Aufgabe zugrunde, einen Bauraum- und kostenoptimierten Anschluß für die Druckleitung an dem Geber- und dem Nehmerzylinder zu schaffen.

### Zusammenfassung der Erfindung

Die Lösung dieser Aufgabe ist erreichbar durch die kennzeichnenden Merkmale von Anspruch 1.

Weitere vorteilhafte Ausgestaltungen der Erfindung sind Gegenstand der abhängigen Ansprüche 2 bis 14.

Gemäß einer vorteilhaften Ausgestaltung umfaßt die Armatur neben dem Leitungsanschluß außerdem ein Entlüftungsventil. Vorzugsweise ist dazu in Verlängerung der Leitungsachse die Armatur auf der vom Leitungsanschluß abgewandten Seite mit einer Aufnahmebohrung versehen, in die das Entlüftungsventil einsetzbar ist.

Als Maßnahme zur Reduzierung der Herstellkosten ist vorgesehen, die Armatur durch ein Spritzgießverfahren herzustellen, die unlösbar mit der Druckleitung verbunden ist. Das Aufspritzen der Armatur auf die Umfangs- und Stirnseite der Druckleitung ist werkzeug- und fertigungstechnisch einfach und daher kostengünstig. Als Maß für die axiale Länge, mit der die Armatur das Druckleitungsende umgibt, ist eine Länge ausreichend, die dem Durchmesser der Druckleitung entspricht. Abhängig vom Spitzendruck des Hydrauliksystems kann die axial umspritzte Länge verändert werden.

Für das Spritzgießverfahren zur Herstellung der Armatur ist vorgesehen, die vorzugsweise aus Kunststoff hergestellte Druckleitung über einen paßgenauen, in die Leitungsbohrung eingreifenden Kernstempel zu zentrieren und in einem entsprechenden, zweigeteilten Spritzwerkzeug mit Kunststoff zu umspritzen. Diese Maßnahme stellt eine hochfeste Verbindung zwischen der Druckleitung und der Armatur sicher. Das mehrteilige Spritzwerkzeug kann erfindungsgemäß weiterhin so gestaltet sein, daß neben dem Steckanschluß und der Aufnahmebohrung für die Druckleitung auch die Aufnahmebohrung für das Entlüfterventil eingeformt sind. Für Armaturen, die über einen Dichtring abgedichtet und mittels einer Formfeder oder Halteklammer am Geber- oder Nehmerzylinder gesichert sind, können auch die entsprechenden Umlaufnuten oder Bohrungen mit eingeformt werden.

Neben einer Druckleitung aus Kunststoff schließt die Erfindung weiterhin als Druckleitung ein kunststoffummanteltes Metallrohr ein. Das vorzugsweise mit PA 12 ummantelte Stahlrohr kann dabei in das zur Herstellung der Armatur vorgesehene Spritzwerkzeug eingelegt werden.

Bei einer getrennten Herstellung der Armatur und der Druckleitung eignet sich erfindungsgemäß ein Ultraschallschweißen oder eine Klebung, mit der diese Bauteile unlösbar verbunden werden. Der Vorteil besteht darin, daß die erfindungsgemäßen Winkelarmaturen für Großserien kostengünstig auf Spritzgießmaschinen hergestellt werden können. Damit wird der Einfluß der Rohrtoleranz der Druckleitung auf die Abdichtung, wie es beim Umspritzen gegeben ist, minimiert. Als Maßnahme, mit der die Druckleitung sicher an der Armatur befestigt werden kann, schließt die Erfindung ein, den Endbereich der Druckleitung mit einer radial nach außen gerichteten Doppelung zu versehen. Dabei kann die Doppelung vorzugsweise durch ein Stauchen oder ein radiales Aufweiten hergestellt werden.

Alternativ kann der in der Armatur eingesetzte Endbereich mit einer gestuften Aufweitung versehen sein, die mit der komplementär gestalteten Aufnahmebohrung der Armatur zusammenwirkt. Die Doppelung wie auch der gestufte Endbereich werden bei einem Spritzgießverfahren vom Kunststoff der Armatur umspritzt. Eine gleichwertige formschlüssige Verbindung der Druckleitung mit der Armatur kann mittels einer Ultraschallschweißung erzielt werden.

Als eine weitere Maßnahme zur Kostenreduzierung schließt die Erfindung ein, das Entlüftungsventil als eine Kunststoffventilschraube zu gestalten, die mit einem Dichtring in der Gewindebohrung der Armatur abgedichtet ist.

Zur Sicherung der Steckverbindung, d. h. der Armatur an einem Geber- oder an einem Nehmerzylinder ist eine Rasteinrichtung vorgesehen. Dazu dient vorzugsweise eine Formfeder, die vorgespannt beim Einstecken der Armatur radial ausweicht und die bei einer Lageübereinstimmung mit einer Radialnut am Steckanschluß der Armatur selbsttätig einrastet.

Die Befestigung der Druckleitung in der Armatur kann weiterhin verbessert werden durch eine strukturierte Mantelfläche des Druckleitungsbereichs, der von der Armatur umgeben ist. Dazu bieten sich beispielsweise axial beabstandete Radialnuten an, die während des Spritzgießverfahrens vom Kunststoff der Armatur ausgefüllt werden und damit eine zusätzliche formschlüssige Verbindung herstellen.

### Kurze Beschreibung der Zeichnungen

Die Erfindung wird anhand von mehreren Ausführungsbeispielen in insgesamt fünf Figuren dargestellt und nachstehend näher erläuert. Es zeigen:
- Figur 1: eine erfindungsgemäße Winkelarmatur, versehen mit einem Steckanschluß, einem rechtwinkelig dazu angeordneten Leitungsanschluß sowie mit einem Entlüftungsventil;
- Figur 2: eine alternativ gestaltete Armatur, an die eine Kunststoffleitung sowie eine Kunststofflüfterschraube angeschlossen ist;
- Figur 3: einen Geberzylinder bekannter Bauart, an den stirnseitig eine erfindungsgemäße Armatur angeschlossen ist;
- Figur 4: die Anordnung der Armatur am Druckstutzen eines Nehmerzylinders;
- Figur 5: einen Nehmerzylinder, an dessen Druckstutzen ein Adapter befestigt ist, wobei an den Adapter eine erfindungsgemäße Armatur angeschlossen ist.

### Ausführliche Beschreibung der Zeichnungen

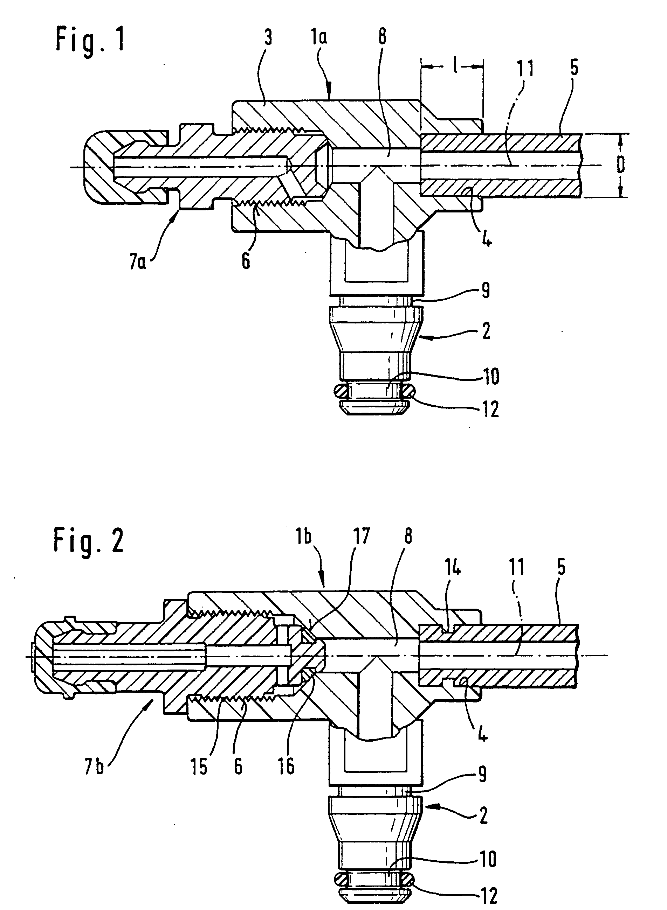

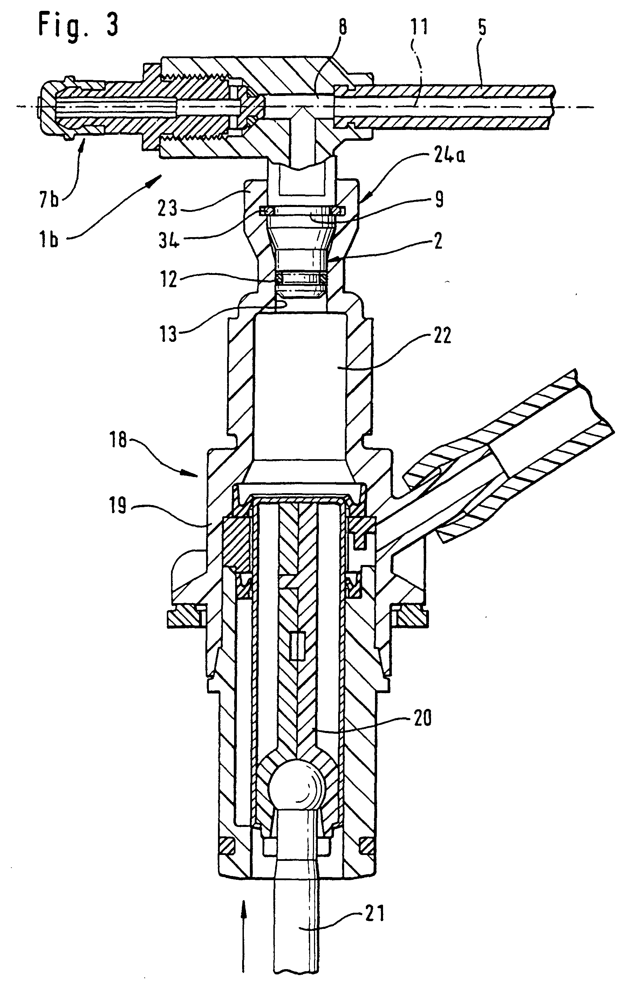

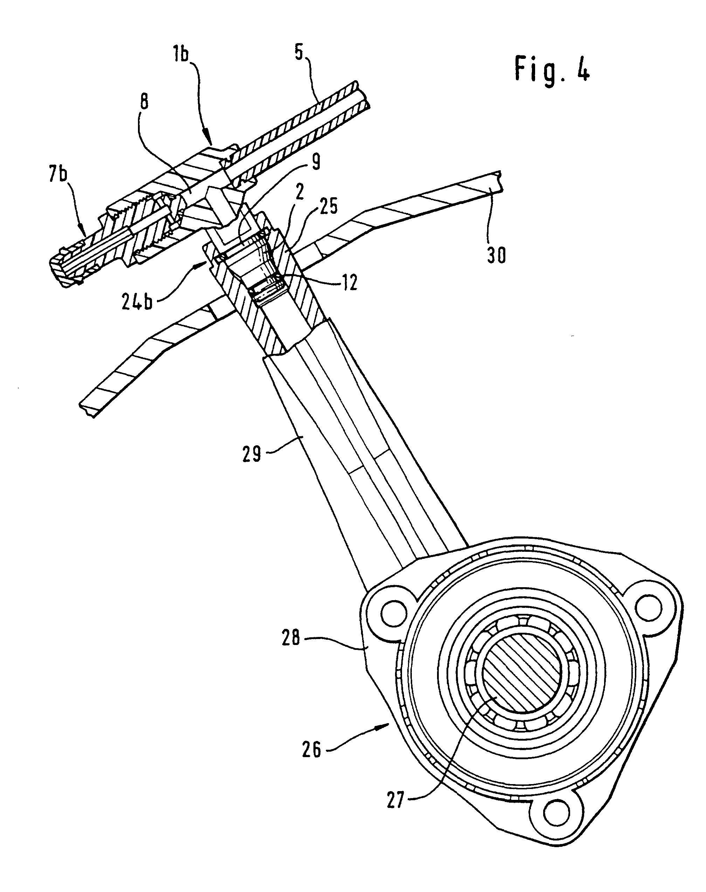

Die Figur 1 zeigt eine erfindungsgemäße Armatur 1 a in einem Längsschnitt. Die Armatur 1 a besitzt einen T-förmigen Aufbau und umfaßt einen Steckanschluß 2, an den sich ein rechtwinkelig angeordnetes Gehäuse 3 anschließt, das an einem Ende eine Aufnahmebohrung 4 für eine Druckleitung 5 aufweist und gegenseitig eine Aufnahme 6 für ein Entlüftungsventil 7a. Eine ebenfalls T-förmig auf einer Leitungsachse 11 verlaufende Zulaufbohrung 8 im Gehäuse 3 verbindet den Steckanschluß 2 mit der Aufnahmebohrung 4 und der Aufnahme 6. Der Steckanschluß 2 bildet ein Innenteil, das im eingebauten Zustand der Armatur 1a, (siehe Figuren 3 und 4), in ein entsprechendes Aufnahmeteil eingesetzt ist. Zur Abdichtung und Lagepositionierung des Steckanschlusses 2 ist dieser mit zwei axial beabstandeten Radialnuten 9, 10 versehen. In die Radialnut 9, die in einem größeren Durchmesserbereich vom Steckanschluß 2 angeordnet ist, verrastet selbsttätig bei Erreichen der Einbaulage ein Halteelement 34 (siehe Figur 3), wozu vorzugsweise eine radial vorgespannte Formfeder einsetzbar ist. Die weitere Radialnut 10 dient zur Aufnahme eines Dichtrings 12, der im eingebauten Zustand der Armatur 1a dichtend an einer Bohrungswandung 13 des Druckanschlusses 23 anliegt (siehe Figur 3). Zur Sicherstellung einer ausreichenden Befestigung der Druckleitung 5 in der Armatur 1a ist folgende axiale Überdeckung vorgesehen. Die Tiefe "I" der Aufnahmebohrung 4 ist dabei gleich oder größer dem Durchmesser "D" der Druckleitung 5.

Die in Figur 2 abgebildete Armatur 1b stellt ein Kunststoffbauteil dar, das mit einer ebenfalls aus Kunststoff hergestellten Druckleitung 5 verbunden ist. Dabei weist der umspritzte Endbereich der Druckleitung 5 eine strukturierte Mantelfläche mit einer Umlaufnut 14 auf, die vom Kunststoff der Armatur 1b ausgefüllt ist. Auch das Entlüftungsventil 7b stellt ein Kunststoffbauteil dar, das in die mit einem Innengewinde versehene Aufnahme 6 einschraubbar ist. Zur wirksamen Abdichtung ist das Entlüftungsventil 7b stirnseitig mit einem Dichtring 16 versehen, der sich in der Einbaulage des Entlüftungsventils 7b dichtend an einer konischen Dichtfläche 17 der Zulaufbohrung 8 abstützt.

Die Figur 3 zeigt die an einem Geberzylinder 18 befestigte Armatur 1b. Der Geberzylinder 18 umfaßt ein ortsfest, vorzugsweise an einer Pedalvorrichtung befestigtes Gehäuse 19, in dem ein Kolben 20 verschiebbar und abgedichtet geführt ist. Eine gelenkig am Kolben 20 angeordnete Kolbenstange 21 verbindet den Geberzylinder 18 mit einem in Figur 3 nicht abgebildeten Pedal. Der Kolben 20 begrenzt weiterhin einen Druckraum 22, der mit einem Druckfluid gefüllt ist. Bei einer Verschiebung des Kolbens 20 in Pfeilrichtung wird das im Druckraum 22 eingeschlossene Druckfluid verdrängt und gelangt über den Druckanschluß 23 in die Armatur 1b. Zur weiteren Druckübertragung dient die Druckleitung 5, welche eine Verbindung zwischen der Armatur 1b und damit dem Geberzylinder 18 und einem in Figur 3 nicht abgebildeten Nehmerzylinder herstellt, zur Betätigung einer Reibungskupplung. Der Druckanschluß 23 ist als ein Aufnahmeteil gestaltet, in das der Steckanschluß 2 zur Bildung einer Steckverbindung 24a eingesetzt ist. Zur Lagepositionierung der Armatur 1b am Geberzylinder 18 ist im Druckanschluß 23 ein Halteelement 34 eingesetzt, das vorzugsweise als eine radial vorgespannte Formfeder gestaltet ist, die sich beim Einsetzen des Steckanschlusses 2 radial aufweitet und bei einer übereinstimmenden Lage der Radialnut 9 mit dem Halteelement 34 selbsttätig verrastet. Der rotationssymmetrisch gestaltete Steckanschluß 2 ermöglicht ein Ausrichten der Armatur 1b und der damit in Verbindung stehenden Druckleitung 5, so daß nach Einbau der Armatur 1b keine nachteilige Verspannung in die Druckleitung 5 eintritt.

Der in Figur 4 in einer Vorderansicht abgebildete Nehmerzylinder 26 ist konzentrisch zu einer Antriebswelle 27 angeordnet, die eine Brennkraftmaschine mit einem Schaltgetriebe verbindet. Das Gehäuse 28 des Nehmerzylinders 26 ist mit einem Druckstutzen 29 versehen, der einen radialen Abstand zwischen dem Nehmerzylinder 26 und einem die Reibungskupplung umschließenden Kupplungsgehäuse 30 überbrückt. Dabei ist der Druckstutzen 29 endseitig mit einem Druckanschluß 25 versehen, der gemeinsam mit dem Steckanschluß 2 der Armatur 1b eine Steckverbindung 24b bildet.

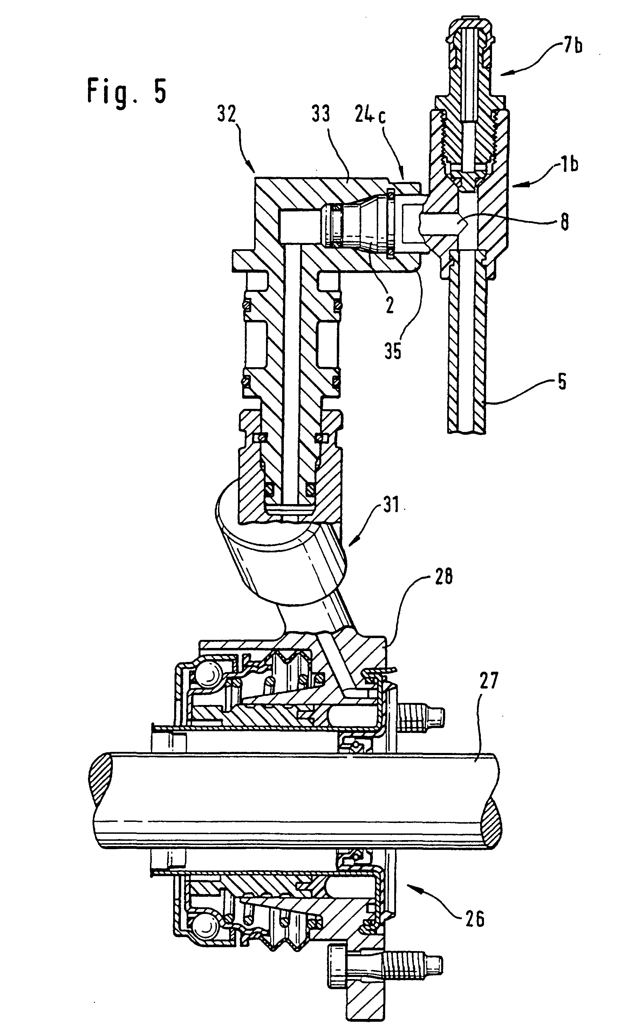

In Figur 5 ist der Nehmerzylinder 26 mit einem alternativ gestalteten Druckstutzen 31 versehen, an den sich zunächst ein Adpater 32 anschließt. Der abgewinkelte Anschlußstutzen 33 weist einen Druckanschluß 35 auf mit dem der Steckanschluß 2 des Adpaters 1b die Steckverbindung 24c bildet. Der Adapter 32 ist vorgesehen für längenreduzierte Druckstutzen 31 und dient zur Überbrückung eines Abstandes zwischen dem Druckstutzen 31 des Nehmerzylinders 26 und dem Kupplungsgehäuse 30 (siehe Figur 4).

### Bezugszahlenliste

- 1a: Armatur
- 1b: Armatur
- 2: Steckanschluß
- 3: Gehäuse
- 4: Aufnahmebohrung
- 5: Druckleitung
- 6: Aufnahme
- 7a: Entlüftungsventil
- 7b: Entlüftungsventil
- 8: Zulaufbohrung
- 9: Radialnut
- 10: Radialnut
- 11: Leitungsachse
- 12: Dichtring
- 13: Bohrungswandung
- 14: Umlaufnut
- 15: Außengewinde
- 16: Dichtring
- 17: Dichtfläche
- 18: Geberzylinder
- 19: Gehäuse
- 20: Kolben
- 21: Kolbenstange
- 22: Druckraum
- 23: Druckanschluß
- 24a: Steckverbindung
- 24b: Steckverbindung
- 24c: Steckverbindung
- 25: Druckanschluß
- 26: Nehmerzylinder
- 27: Antriebswelle
- 28: Gehäuse
- 29: Druckstutzen
- 30: Kupplungsgehäuse
- 31: Druckstutzen
- 32: Adapter
- 33: Anschlußstutzen
- 34: Halteelement
- 35: Druckanschluß

## Patentansprüche

1. Druckleitungssystem für eine hydraulische Kupplungsbetätigung einer Reibungskupplung von Fahrzeugen, das einen manuell über eine Pedalvorrichtung aktivierbaren Geberzylinder (18) mit einem der Reibungskupplung zugeordneten Nehmerzylinder (26) verbindet, wobei die Druckleitung (5) über eine Steckverbindung (24a bis 24c) am Geberzylinder (18) und/oder am Nehmerzylinder (26) angeschlossen ist, wobei die Steckverbindung (24a bis 24c) eine winkelig zu einer Leitungsachse (11) ausgerichtete, einen Steckanschluß (2) bildende Armatur (1a, 1b) umfasst und der als ein Innenteil gestaltete Steckanschluß (2) in einen Druckanschluß (23, 25, 35) am Geberzylinder (18) und/oder am Nehmerzylinder (26) bzw. an einem Adapter (32) einsetzbar ist, **dadurch gekennzeichnet, dass** als Werkstoff für die Druckleitung (5) und die Armatur (1b) eine geeignete, spritzbare Kunststoffpaarung vorgesehen ist.

2. Druckleitung nach Anspruch 1, **dadurch gekennzeichnet, dass** die Armatur (1a, 1b) auf der Ebene der Leitungsachse (11) mit einer Aufnahme (6) für ein Entlüftungsventil (7a, 7b) versehen ist.

3. Druckleitung nach Anspruch 1, **dadurch gekennzeichnet, dass** die Druckleitung (5) aus Polyamid und die Armatur (1b) aus einem faserverstärkten Polyamid bestehen.

4. Druckleitung nach Anspruch 1, **dadurch gekennzeichnet, dass** zur Erzielung einer übereinstimmenden Werkstoffpaarung die Armatur (1a, 1b) und die Druckleitung (5) aus einem Werkstoff hergestellt sind.

5. Druckleitung nach Anspruch 1, **gekennzeichnet durch** eine im Spritzgießverfahren hergestellte Armatur (1b), die unlösbar an der Druckleitung (5) angeordnet ist.

6. Druckleitung nach Anspruch 1, **dadurch gekennzeichnet, dass** die Druckleitung (5) mit einer Länge "I" in eine Aufnahmebohrung (4) der Armatur (1a, 1b) eingesetzt ist, wobei die Länge "I" gleich oder größer dem Durchmesser "D" der Druckleitung (5) ist.

7. Druckleitung nach Anspruch 5, **gekennzeichnet durch** ein zweigeteiltes oder mehrgeteiltes Spritzwerkzeug, in das ein Leitungsende der Druckleitung (5) zentriert und mit Kunststoff umspritzt wird.

8. Druckleitung nach Anspruch 7, **dadurch gekennzeichnet dass** zur Herstellung der Armatur (1b) das mehrteilige Spritzwerkzeug so gestaltet ist, dass in dieses sowohl die Aufnahme (6) für das Entlüftungsventil (7a, 7b), eine Zulaufbohrung (8) sowie eine Aufnahmebohrung (4) für die Druckleitung (5) eingeformt sind.

9. Druckleitung nach Anspruch 1, **dadurch gekennzeichnet, dass** als Druckleitung (5) ein kunststoffummanteltes Metallrohr eingesetzt ist.

10. Druckleitung nach Anspruch 1, **dadurch gekennzeichnet, dass** die Armatur (1b) durch eine Ultraschallschweißung mit der Druckleitung (5) aus Kunststoff oder einem kunststoffummantelten Metallrohr verbunden ist.

11. Druckleitung nach Anspruch 10, **dadurch gekennzeichnet, dass** der zu verbindende Endbereich der Druckleitung (5) eine durch ein Stauchen oder Aufweiten hergestellte radial nach außen gerichtete Doppelung aufweist.

12. Druckleitung nach Anspruch 10, **dadurch gekennzeichnet, dass** der in die Armatur (1a, 1b) eingreifende Endbereich der Druckleitung (5) eine gestufte Aufweitung aufweist, die mit einer komplementär gestalteten Aufnahmebohrung (4) zusammenwirkt.

13. Druckleitung nach Anspruch 1, **dadurch gekennzeichnet, dass** die Steckverbindung (24a bis 24c) als eine Schnappverbindung ausgelegt ist und dazu ein Halteelement (34) im Druckanschluß (23, 25) eingesetzt ist, das im eingebauten Zustand der Armatur (1a, 1b) selbsttätig in eine Radialnut (9) des Steckanschlusses (2) verrastet.

14. Druckleitung nach Anspruch 1, **gekennzeichnet durch** ein als Kunststoffventilschraube ausgebildetes Entlüftungsventil (7b), das in ein Befestigungsgewinde der Aufnahme (6) einschraubbar und mittels eines Dichtrings (16) abgedichtet ist.

## Claims

1. A pressure line system for a hydraulic clutch control of a friction clutch in vehicles that connects a master cylinder (18), which may be manually activated via a pedal device, to a slave cylinder (26), which is dependent on the friction clutch, wherein the pressure line (5) is connected via a mating connection (24a to 24c) to the master cylinder (18) and/or to the slave cylinder (26), the mating connection (24a to 24c) includes an armature(1a, 1b) that is aligned at an angle to a line axis (11) and forms a socket connection (2), and the socket connection (2), which is configured as an inner part, can be inserted into a pressure connection (23, 25, 35) on the master cylinder (18) and/or on the slave cylinder (26) and on an adapter (32), **characterised in that** a suitable, sprayable plastic coupling is provided as the material for the pressure line (5) and the armature (1b).

2. The pressure line according to claim 1,
**characterised in that** the armature (1a, 1b) is provided with a seating (6) for a vent valve (7a, 7b) on the plane of the line axis (11).

3. The pressure line according to claim 1,
**characterised in that** the pressure line (5) is made from polyamide and the armature (1b) is made from a fibre-reinforced polyamide.

4. The pressure line according to claim 1,
**characterised in that** the armature (1a, 1b) and the pressure line (5) are made of the same material in order to achieve a matching coupling of materials.

5. The pressure line according to claim 1,
**characterised by** an armature (1b) that is manufactured in an injection moulding method and is attached in non-detachable manner to the pressure line (5).

6. The pressure line according to claim 1,
**characterised in that** the pressure line (5) having a length "1" is inserted into a receiving borehole (4) on the armature (1a, 1b), the length "1" being equal to or greater than the diameter "D" of the pressure line (5).

7. The pressure line according to claim 5,
**characterised by** a two-part or multi-part spray tool in which a line end of the pressure line (5) is centred and coated with plastic.

8. The pressure line according to claim 7,
**characterised in that** the multi-part spray tool is configured for producing the armature (1b) in such manner that the seating (6) for the vent valve (7a, 7b), an inlet borehole (8), and a receiving borehole (4) for the pressure line (5) are formed therein.

9. The pressure line according to claim 1,
**characterised in that** a plastic-clad metal pipe is used as the pressure line (5).

10. The pressure line according to claim 1,
**characterised in that** the armature (1b) is connected via an ultrasonic weld to the pressure line (5) made from plastic or a plastic-clad metal pipe.

11. The pressure line according to claim 10,
**characterised in that** the end region of the pressure line (5) to be connected has a doubled region facing radially outwardly and produced by upsetting or flaring.

12. The pressure line according to claim 10,
**characterised in that** the end region of the pressure line (5) engaging with the armature(1a, 1b) has a stepped expansion that acts in cooperation with a receiving borehole (4) that is configured in complementary manner.

13. The pressure line according to claim 1,
**characterised in that** the mating connection (24a to 24c) is configured as a snap-on connector and a retaining element (34) in the pressure connection (23, 25) is used for this purpose, the retaining element automatically locking in a radial groove (9) of the socket connection (2) in the installed state of the armature (1a, 1b).

14. The pressure line according to claim 1,
**characterised by** a vent valve (7b), which is configured as a plastic valve screw and is able to be screwed into a fastening thread of the seating (6) and is sealed by a sealing ring (16).

## Revendications

1. Système de conduites sous pression pour une commande d'embrayage hydraulique d'un embrayage à friction de véhicules, qui relie un cylindre émetteur (18) pouvant être activé manuellement par un dispositif à pédale, à un cylindre récepteur (26) associé à l'embrayage à friction, où la conduite sous pression (5) est reliée, par un raccordement enfichable (24a à 24c), au cylindre émetteur (18) et/ou au cylindre récepteur (26), où le raccordement enfichable (24a à 24c) comprend une garniture (1a, 1b), formant un raccord enfichable (2), alignée de façon angulaire par rapport à un axe de conduite (11), et le raccord enfichable (2) formé comme une pièce intérieure peut être introduit dans un raccord sous pression (23, 25, 35) placé sur le cylindre émetteur (18) et/ou sur le cylindre récepteur (26), ou bien sur un adaptateur (32), **caractérisé en ce qu'**il est prévu, comme matière pour la conduite sous pression (5) et pour la garniture (1b), un appariement de matières plastiques appropriées pouvant être moulées par injection.

2. Conduite sous pression selon la revendication 1, **caractérisée en ce que** la garniture (1a, 1b) est dotée, sur le plan de l'axe de la conduite (11), d'un logement (6) pour une soupape de ventilation (7a, 7b).

3. Conduite sous pression selon la revendication 1, **caractérisée en ce que** la conduite sous pression (5) est en polyamide et la garniture (1b) en polyamide renforcé par des fibres.

4. Conduite sous pression selon la revendication 1, **caractérisée en ce que** pour obtenir un appariement conforme de matières, la garniture (1a, 1b) et la conduite sous pression (5) sont composées d'une seule matière.

5. Conduite sous pression selon la revendication 1, **caractérisée par** une garniture (1b) fabriquée par le procédé de moulage par injection, laquelle garniture est disposée de façon inamovible sur la conduite sous pression (5).

6. Conduite sous pression selon la revendication 1, **caractérisée en ce que** la conduite sous pression (5), ayant une longueur "1", est introduite dans un perçage (4) du logement de la garniture (1a, 1b), où la longueur "1" est égale ou supérieure au diamètre "D" de la conduite sous pression (5).

7. Conduite sous pression selon la revendication 5, **caractérisée par** un moule à injection en deux parties, ou plus, dans lequel est centrée et enrobée de matière plastique une extrémité de la conduite sous pression (5).

8. Conduite sous pression selon la revendication 7, **caractérisée en ce que**, pour la fabrication de la garniture (1b), le moule à injection en plusieurs parties est configuré de manière telle, qu'aussi bien le logement (6) pour la soupape de ventilation (7a, 7b), un perçage d'alimentation (8) ainsi qu'un perçage de logement (4) pour la conduite sous pression (5), sont formés dans ce moule à injection.

9. Conduite sous pression selon la revendication 1, **caractérisée en ce que** l'on utilise, comme conduite sous pression (5), un tuyau métallique enrobé de matière plastique.

10. Conduite sous pression selon la revendication 1, **caractérisée en ce que** la garniture (1b) est reliée, par une soudure à ultrasons, à la conduite sous pression (5) en matière plastique ou à un tuyau métallique enrobé de matière plastique.

11. Conduite sous pression selon la revendication 10, **caractérisée en ce que** la zone d'extrémité de la conduite sous pression (5), devant être raccordée, présente un doublage tourné vers l'extérieur, dans le sens radial, fabriqué par refoulement ou par élargissement.

12. Conduite sous pression selon la revendication 10, **caractérisée en ce que** la zone d'extrémité de la conduite sous pression (5), pénétrant dans la garniture (1a, 1b), présente un élargissement étagé qui agit en association avec un perçage de logement (4) configuré de façon complémentaire.

13. Conduite sous pression selon la revendication 1, **caractérisée en ce que** le raccordement enfichable (24a à 24c) est conçu comme un assemblage à encliquetage et, pour ce faire, un élément de retenue (34) est introduit dans le raccord sous pression (23, 25), lequel élément de retenue, lorsque la garniture (1a, 1b) est à l'état monté, s'engage automatiquement dans une rainure radiale (9) du raccord enfichable (2).

14. Conduite sous pression selon la revendication 1, **caractérisée par** une soupape de ventilation (7b) configurée comme une vis de soupape en matière plastique, laquelle soupape de ventilation peut être vissée dans un filetage de fixation du logement (6) et être rendue étanche au moyen d'une bague d'étanchéité (16).
